# EUROPEAN PATENT SPECIFICATION

(11) **EP 2 168 652 B1**
(45) Date of publication and mention of the grant of the patent: **08.02.2012**
(21) Application number: 09171112.7
(22) Date of filing: 23.09.2009
(51) Int. Cl.: B01D 46/12, B01D 46/52, B01D 46/00

(54) **Filter for fluids and process for the manufacture thereof.**
Filter für Fluide und Verfahren zu seiner Herstellung
Filtre pour fluide et son procédé de son fabrication

(30) Priority: 24.09.2008 IT TO20080698
(43) Date of publication of application: 31.03.2010
(73) Proprietor: OFFICINE METALLURGICHE G. CORNAGLIA S.p.A., 10092 Beinasco (IT)
(72) Inventor: Cornaglia, Umberto, 10027 Moncalieri (T0) (IT); Rocca, Giorgio, 10131 Torino (IT)
(74) Representative: Robba, Pierpaolo

(56) References cited:
- WO-A-83/01582
- GB-A- 1 075 732
- US-A- 4 589 983

## Description

### Technical field of the invention

The present invention relates to a filter for fluid of the so-called "orthogonal" type. More in detail, the invention relates to a cartridge construction of an orthogonal filter and a process for manufacturing such filter.

### Prior art

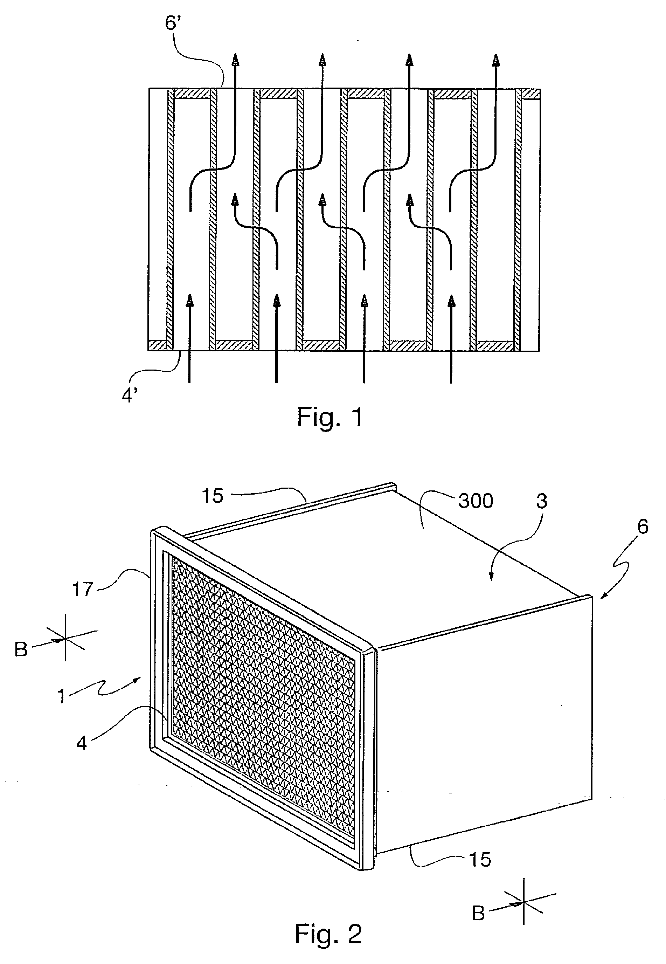

A currently known air filter type is the so-called "orthogonal filter", named in such a way due to the path followed by the air which is filtered. An example of such orthogonal filter is, for instance, disclosed in WO 83/01582. An orthogonal filter is obtained from alternately stacking corrugated sheets made of a suitable filtering material - e.g. paper - and non-corrugated sheets made of filtering material, so as to make up a stack, or pack, substantially having the shape of a parallelepiped or prism. Such pack, which constitutes the so-called "filtering element" of a filter cartridge, defines:
- an upstream face 4' arranged for being crossed by air which is still to be filtered and for facing the dirty air region of the filtering system; and
- a downstream face 6' arranged for releasing the filtered air and for facing the clean air region of the filtering system (Figure 1).

The smooth and corrugated paper sheets are superimposed in such a manner to form a plurality of grooves respectively arranged side by side. Each groove has an open end and a closed end, and extends from the upstream face 4' to the downstream face 6'.

In each layer, formed by a corrugated sheet and a non-corrugated sheet, each groove which has a closed end facing the upstream or downstream face 4' or 6' is adjacent to at least one groove which has an open end facing the same upstream or downstream face; during filtration this feature forces air, or other fluids, to cross the lateral walls of the channels and the sheets of filtering material before leaving the filter. The orthogonal filters are currently used for the air to be filtered before being admitted into internal combustion engine for large goods vehicles, such as lorries and road tractors, heavy and light industrial vehicles, automobiles, or in order to filter air to be admitted in gas turbines.

The orthogonal filters can be assembled without gluing the crest tops of the corrugated sheets over their whole length to the adjacent non-corrugated sheets; owing to this the manufacturing process is simplified and during operation an improved filter efficiency is attained.

Therefore, when the filtering element is manufactured as a stack, and not as a roll, made up of corrugated and non-corrugated sheets, it is necessary to close the sides of the filtering element at the edges of the different corrugated and non-corrugated sheets, in order to achieve an adequate air-tightness, so that air mainly flows from the upstream face towards the downstream face during filtration. GB-A-1 075 732 discloses a technical solution in order to close the filtering element sides at the edges of the sheets of which such filtering element is made up. More specifically, such document illustrates a non-orthogonal filtering device which comprises deeply pleated sheets of corrugated filtering material which are respectively separated by spacer sheets which are also corrugated. Such filter includes a frame which comprises a pair of tray-like side members and a further pair of side plane plates. The bent edges of the tray-like side members are mechanically coupled to respective flanges held by the side plane plates at opposite edges thereof, so as to cover all four side faces of the filtering element.

However the technical solution proposed by such document suffers from the drawback due to the large reduction of the filtering lateral surface which can be actually and effectively used by the filtering element

Therefore an object of the present invention is to provide in an orthogonal filter a solution to the problem of closing the filtering element sides, which are formed by the edges of the different corrugated and non-corrugated sheets, in such a manner that during filtration the air mainly flows from the upstream face towards the downstream face and that at the same time the effectively usable filtering lateral surface is subjected to the lowest possible decrease.

### Summary of the invention

Such object is achieved, according to a first aspect of the present invention, by a filter for fluids having the features of claim 1.

According to a second aspect of the present invention, such object is achieved by a process for manufacturing a filter for fluids and which has the features of claim 11.

In particular, neither of the above discussed prior art, taken alone or in combination, discloses a device or a process which uses the distinguishing features cited in the respective characterising portion of claim 1 and 11 in order to solve the above mentioned object of the invention. The advantages which can be achieved owing to the present invention will appear more clearly to the skilled man, by the following detailed description of an exemplary and non-limitative particular embodiment which is given with reference to the following schematic figures.

### Brief description of the drawings

Figure 1 shows a cross-section of an orthogonal filter which is known per se;
Figure 2 shows a perspective view of a filter cartridge according to a particular embodiment of the present invention;
Figures 3, 4, 5, 7 shows a sequence of different steps of the process for manufacturing the cartridge of Figure 2;
Figure 6 shows a partially sectioned detail of the filter cartridge of Figure 2, taken along the section plane B-B which is parallel to the upstream and downstream faces of the filter cartridge; and
Figure 8 shows a perspective view of a manufacturing station arranged for pouring glue on the lateral plates of the filter cartridge of Figure 2.

### Detailed description of the invention

Figures 2-8 relate to a particular embodiment of a filter cartridge according to the invention.

Such cartridge, denoted by the overall reference 1, comprises a filtering element 3 substantially having the shape of a parallelepiped and defining an upstream face 4 arranged for receiving the air - or another fluid - to be filtered, and a downstream face 6 arranged for releasing the air - or another fluid - which has been filtered.

Moreover the filtering element 3 defines four sides which extend between the upstream face 4 and the downstream face 6. Such sides have a first pair of respectively opposite lateral faces 302, 306, and a second pair of respectively opposite lateral faces 300, 304 and which are adjacent to the first pair of lateral faces 302, 306. The filtering element 3 is obtained from staking a plurality of corrugated filtering paper sheets which alternate with a plurality of plane - or however non-corrugated - filtering paper sheets. The corrugated paper sheets can be obtained by an appropriate folding machine which is known per se.

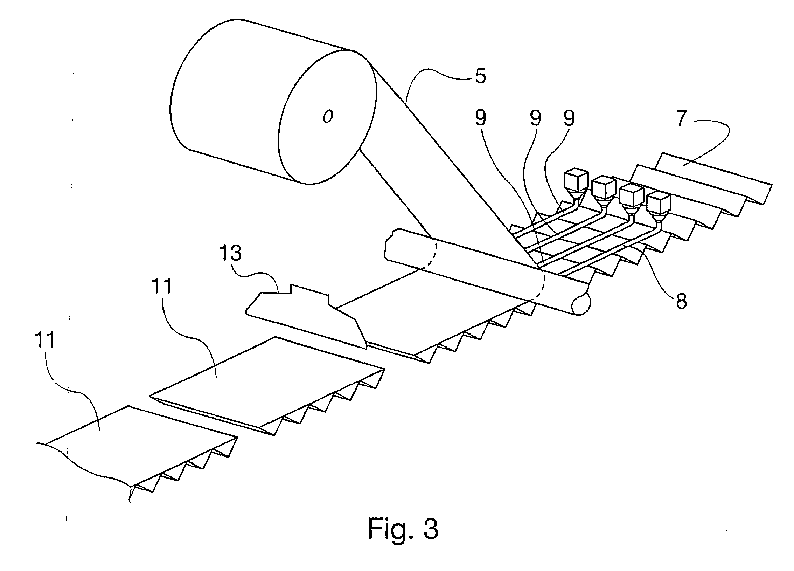

Figure 3 shows a possible sequence of steps downstream of the folding machine: a non-corrugated paper continuous band 5 is superimposed on the corrugated paper continuous band 7 and it is coupled by means of sealing glue lines 8 and tacking glue lines 9. In the present description, the word "glue" is to be intended as any adhesive substance which is capable of fixing together two objects. Such adhesive substance can be, for instance, a simple polymeric resin, thermoplastic or thermosetting, which is applied in fluid state on the parts to be connected and is then made to reticulate, or somehow to harden. A "glue" according to the present description can reticulate, or somehow harden, without releasing solvents, as an effect of the sole temperature.

Preferably but not necessarily, a hot-melt polyamide can be used as sealing glue 8 and tacking glue 9.

With reference again to Figure 3, the composite band resulting from coupling the band 5 to the band 7 is subsequently cut in rectangular pieces 11, for example by means of the cutter 13. Such pieces, made up of a corrugated sheet coupled to a non-corrugated sheet, will be referred to as "semifinished products 11" in the present description.

The sealing glue line or seam 8, referred to as "first glue seam 8" in the present description, is laid along an edge of the bands 5 and 7 in order to glue them together and to close a groove end on the upper face of the corrugated band 7.

The tacking glue lines 9 are arranged lengthwise of the two bands 5, 7 and properly spaced apart from the edges thereof, and have the sole task to keep the corrugated and non-corrugated paper sheets together, avoiding the semifinished pieces 11 to open as a book during manufacturing, therefore making them easier to be worked. Instead, the glue lines 9 do not have the task to glue the corrugation tops to the non-corrugated sheet over the whole length of such corrugations; therefore the air which pass through the filter 1 can move from a channel to an adjacent channel by flowing over the corrugated sheet corrugations.

In this manner the first lateral faces 302, 306 include the corrugated and non-corrugated sheet edges (Figure 2, 5, 6) which are not sealed by the sealing glue 8. As a consequence, when the filtering element 3 is made up by stacking several pieces 11, it is necessary to close its first lateral faces 302, 306, avoiding that the air passing through the filter can diffuse through them with the risk that air is not filtered and making air to flow mainly from the upstream face 4 towards the downstream face 6.

For this purpose, the filter cartridge according to the invention is provided with a pair of lateral plates 15 which close in a leak-tight manner the sides of the filtering element 3 at the fist pair of faces 302, 306. In order to obtain such leak-tightness, the plates 15 are substantially air-tight - or somehow they ensure tightness against the fluid to be filtered - and are separately manufactured and subsequently glued to the filtering element 3 by means of adequate glues, or are more generally welded by laying an adequate adhesive substance in fluid state between each plate 15 and the filtering element and then by curing - or somehow hardening - such adhesive substance.

The plates 15 further contribute to keep together the pack made up of several corrugated and non-corrugated sheets and to properly render it compact and cohesive, in order to make it be more easily handled during filter manufacturing.

With reference again to the invention, the plates 15 are provided with perimeter edges 150 which are bent on and about at least two edges of the filtering element in order to cover only partially the second pair of lateral faces 300, 304 which are adjacent to the first pair of lateral faces 302, 306 which include the corrugated and non-corrugated sheet edges (Figure 2, 5, 6).

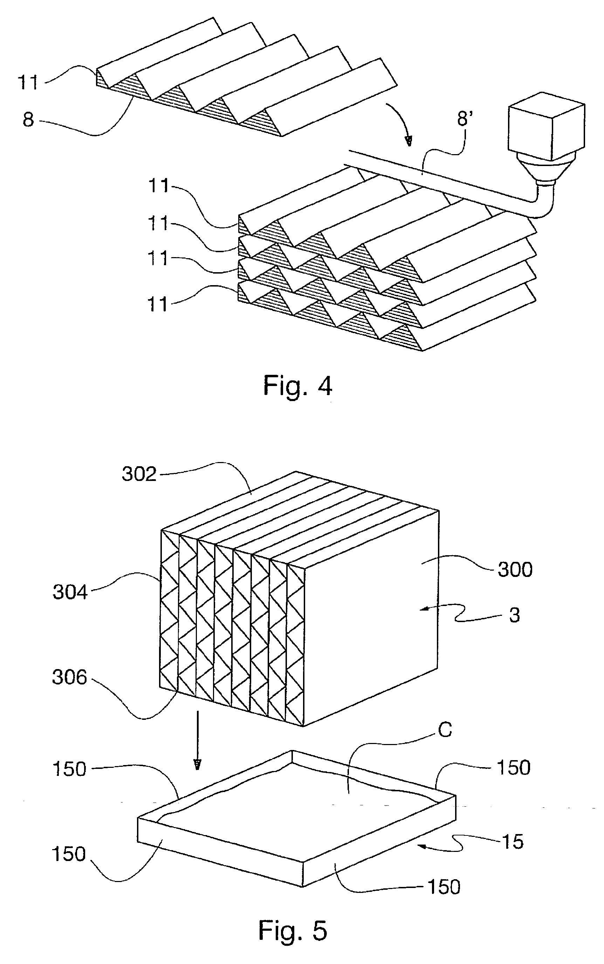

In such a manner the leak-tight closure of the first pair of lateral faces 302, 306 is safeguarded by subjecting to the lowest possible decrease the filtering surface effectively used by the second pair of lateral faces 300, 304. Advantageously the bent perimeter edges 150 substantially extend along the whole perimeter of the plates themselves (Figure 5).

In addition to above, the bent edges 150 have several tasks. A fist task is to give a more precise parallelepiped-like shape to the filtering element 3, in particular by keeping in shape the corrugated and non-corrugated sheet pack edges and reducing the dimensional tolerances of the parallelepiped itself. The geometrical and shape tolerance reduction of the filtering element is, for example, advantageous in that:
- it allows to reduce the outer overall dimensions of the filter case (not shown) in which the cartridge 1 is inserted during use;
- it facilitates the insertion of the cartridge 1 in the above mentioned filter case; and
- it generally facilitates the automation of the process for manufacturing the cartridge itself and the assembly made up of the cartridge and the filter case.

A second task is to make easier and improve the attachment operation between the plates themselves and the filtering element 3; actually such attachment can be achieved as follows.

A plurality of semifinished pieces 11 is stacked so as to form a substantially parallelepiped pack. As they are superimposed one on the other while the respective first sealing seams 8 are facing downwards, the semifinished pieces 11 are glued by means of second sealing seams 8' laid on the edges of the pieces 11 which are located in opposite position with respect to those on which the first sealing glue seams 8 are positioned (Figure 4). In such a manner, each layer can compose the succession of the channels which are alternately opened at the upstream and downstream face, and which force air to follow the path outlined in Figure 1.

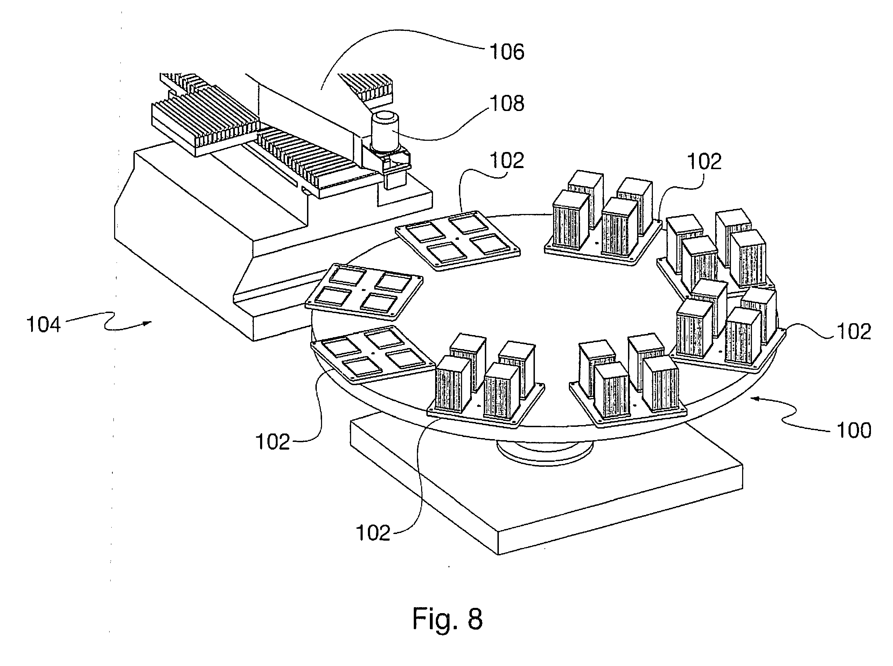

At the same time, in another manufacturing station, an operator or a numerical controlled machine - for example, such as the one shown in Figure 8 - pours sealing glue C on a first lateral plate 15 arranged with its bent edge 150 facing upwards. The glue expands on the whole surface of the plate 15 but it does not overflows, being contained by the bent edges 150 (Figure 5).

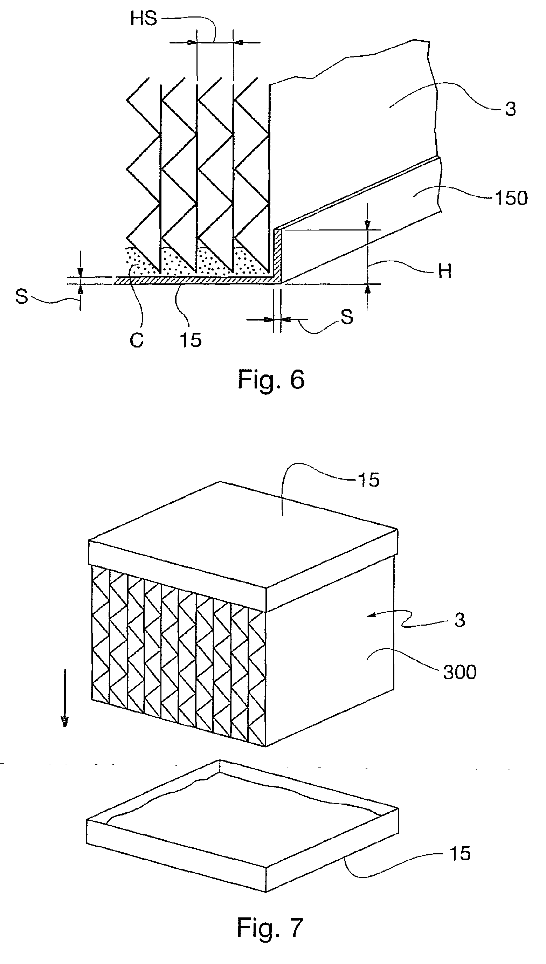

After that, the stack of semifinished pieces 11 is put on the plate 15, so that the sealing glue C closes the passages between the several corrugated and non-corrugated sheets located on the sides of the filtering element 3 (Figure 6); as shown in such figure, the corrugated and non-corrugated sheet edges are soaked in the sealing glue C. Advantageously such glue is made to reticulate, or somehow to cure, while leaving the filtering element 3 to rest on the first lateral plate 15. When the glue C is sufficiently hardened, the filter element is overturned and another lateral plate 15 is glued on the side of the filtering element 3, which is located in opposite position with respect to the plate 15 which has been previously glued (Figure 7). Advantageously the glue C is made to reticulate, or somehow to cure, while leaving the filtering element 3 to rest on the second lateral plate 15.

The sealing glue, being able to be abundantly poured and being free to expand on the whole surface of the plates 15 owing to the bent edges 150, is capable of closing in an adequate fluid-tight manner the sides of the filtering element 3 to which the plates 15 are glued. Subsequently the filter cartridge 1 is completed by moulding the perimeter sealing gasket 17 made of expanded polyurethane rubber. (Figure 1).

In order to effectively preserve the filtering element shape, the lateral plates are preferably made of plastic material. Preferably, such plastic material is not expanded (in other words, not foamed). For example, such material can be polyamide, polypropylene, acrylonitrile butadiene styrene (ABS). Preferably, in order to be sufficiently solid, the lateral plates have a wall minimum thickness S substantially equal to or more than 0,5mm (Figure 6); more preferably such minimum thickness S is equal to or more than 1mm. In the embodiment shown in the attached figures, such minimum thickness S is about 2,5mm.

For the purpose of properly containing the glue in fluid state to be poured on the lateral plates, the bent edges thereof have preferably a height H which is substantially not smaller than groove average height HS of the corrugated sheets (Figure 6). Such groove average height HS is calculated as an average over the whole filtering element. More preferably, the bent edge height H is substantially not smaller than 1,5 times the groove average height HS of the filtering material sheet. Even more preferably, the bent edge height H is substantially not smaller than twice the average height HS of the above mentioned grooves. In order to satisfactorily contain the glue in fluid state, some preferred values for the height H of the bent edges 150 are given by H equal to or larger than about 3mm, or about 5mm. Figure 8 shows an example of a manufacturing station arranged for pouring glue in fluid state on the lateral plates.

The manufacturing station comprises a rotary table 100 arranged for rotating about a vertical axis and to which a plurality of work-holding plates 102 is mounted. Each work-holding plate defines positioning seats arranged for housing and positioning the lateral plates 15 in a substantially horizontal position, with the bent edges 150 facing upwards. A metered dispensing machine 104 is arranged next to the rotary table 100 and it is in turn provided with a cantilevered arm 106 which is translatable in three spatial directions. To the free end of the cantilevered arm 106 is mounted a metered dispensing head 108 arranged for pouring an adequate quantity of glue C on the lateral plates 15 located on the rotary table 100 by means of a metered dispensing nozzle which is not shown. During operation the metered dispensing nozzle moves horizontally and in a automatically controlled manner by means of a numerical control, so as to completely cover the lateral plates 15 with a layer of glue C which is as even as possible and without gaps.

According to the present invention, not only orthogonal filters for air can be made, but for other gases or liquids as well. The glue or the other substance which is suitable for alternately closing the ends of the different channels of the filtering element can be affixed not only by laying a seam, but for instance by injection as well. The lateral plates can be attached to the filtering element not only by gluing it by means of an adhesive substance which is added to the material of the filtering element and the plates, but also by welding them to the filtering element by means of the same material of the lateral plates or of the corrugated sheet and/or non corrugated-sheet; for example, it is possible to subject the plastic material of the lateral plates and/or the material of the corrugated and non corrugated sheets to local melting or ultrasonic welding.

In order to attach the lateral plates 15 to the filtering element, it can be used the same expanded polyurethane rubber which is used for manufacturing the gasket 17; in this case the polyurethane rubber, or the other expanded polyurethane substance, can be spilled in fluid state on two lateral plates 15 arranged as previously described, and therefore it can be made to reticulate after the filtering element 3 has been brought next to the plates. The lateral plates can have not only a substantially planar shape, as shown in Figure 2, 5-7, but also non-planar shapes, for instance concave, convexes, or undulated in various manners.

The embodiments and the lists of the possible variants of the present invention are to be intended as non-exhaustive lists.

## Claims

1. Filter for fluids, comprising a filter cartridge (1) in turn comprising a filtering element (3) having parallelepiped-like shape and obtained from stacking a plurality of corrugated sheets made by filtering material and a plurality of non-corrugated sheets made of filtering material, wherein:
- the filtering element (3) defines an upstream face (4), a downstream face (6) and four sides (300, 302, 304, 306) extending between the upstream face and the downstream face;
- each sheet of corrugated filtering material alternates with a sheet of non-corrugated material;
- the corrugations of each sheet of corrugated filtering material form a plurality of grooves respectively arranged side by side and extending from the upstream face (4) to the downstream face (6);
- substantially in each corrugated sheet, the ends of the grooves on a predetermined face of that corrugated sheet are closed at the upstream face (4) and open at the downstream face (6), while the ends of the grooves on the face opposite to the predetermined face of the same corrugated sheet are closed at the downstream face (6) and opened at the upstream face (4), so as to force the fluid, which is to be filtered and mainly flows from the upstream face towards the downstream face, to cross the filtering material before leaving the filter; and
- said sides define a first pair of respectively opposite lateral faces (302, 306) including the corrugated and non-corrugated sheets edges, and a second pair of respectively opposite lateral faces (300, 304) adjacent to said first pair of lateral faces (302, 306);
said filter being **characterised in that** the filter cartridge (1) comprises a couple of lateral plates (15) fixed to the sides (300, 302, 304, 306) of the filtering element, so as to close substantially in a fluid-tight manner said sides at the first pair of lateral faces (302, 306); said lateral plates (15) being further provided with bent edges (150) covering only partially said second pair of lateral faces (300, 304) in such a manner that said filter is capable of filtering a fluid even through portions which belong to said second pair of lateral faces (300, 304) and are free from said bent edges (150).

2. Filter according to claim 1, wherein said faces (300, 302, 304, 306) are substantially planar and each lateral plate (15) has substantially planar shape.

3. Filter according to one or more preceding claims, wherein the bent edges (150) of each lateral plate (15) extend over the whole perimeter of the lateral plate itself.

4. Filter according to one or more preceding claims, wherein each lateral plate (15) is glued and/or welded to the filtering element (3).

5. Filter according to claim 4, wherein each lateral plate (15) is glued to the filtering element (3) by interposing an adhesive substance (C) between the lateral plate (15) itself and the filtering element (3).

6. Filter according to one or more preceding claims, wherein each lateral plate (15) is made of plastic material.

7. Filter according to one or more preceding claims, wherein each lateral plate (15) is made of substantially non-foamed material.

8. Filter according to claim 6 and/or 7, wherein the minimum thickness of the wall (S) of each lateral plate (15) is substantially equal to or greater than 0,5 mm.

9. Filter according to one or more preceding claims, wherein the minimum height (H) of the bent edges (150) of each lateral plate (15) is substantially equal to or greater than the average height (HS) of the grooves of the corrugated sheets.

10. Filter according to one or more preceding claims, wherein the minimum height (H) of the bent edges (150) of each lateral plate (15) is substantially equal to or greater than about 3 mm.

11. Process for manufacturing a filter for fluids having the features according to one or more preceding claims, comprising the following steps:
a) providing a filtering element (3) having parallelepiped-like shape and obtained from stacking a plurality of sheets of corrugated filtering material and a plurality of sheets of non-corrugated filtering material, wherein:
a.1) the filtering element (3) defines an upstream face (4), a downstream face (6) and four sides (300, 302, 304, 306) extending between the upstream face (4) and the downstream face (6); said sides defining a first pair of respectively opposite lateral faces (302, 306) including the corrugated and non-corrugated sheets edges, and a second pair of respectively opposite lateral faces (300, 304) adjacent to said first pair of side faces (302, 306) ;
a.2) each sheet of corrugated filtering material alternates with a sheet of non-corrugated filtering material;
a.3) the corrugations of each sheet of corrugated filtering material form a plurality of grooves respectively arranged side by side and extending from the upstream face (4) to the downstream face (6);
a.4) substantially in each corrugated sheet, the ends of the grooves formed by a predetermined face of that corrugated sheet are closed at the upstream face (4) and open at the downstream face (6), while the ends of the grooves formed by the face opposite to the predetermined face of the same corrugated sheet are closed at the downstream face (6) and opened at the upstream face (4), so as to force the fluid, which is to be filtered and mainly flows from the upstream face towards the downstream face, to cross the filtering material before leaving the filter;
b) arranging a pair of lateral plates (15) provided with bent edges (150);
c) fixing said lateral plates (15) on the sides (302, 306) of the filtering element, so as to close substantially in a fluid-tight manner said sides at the first pair of lateral faces (302, 306), and so that the bent edges (150) of the said lateral plates (15) cover only partially said second pair of lateral faces (300, 304); said filter being capable of filtering a fluid even through portions which belong to said second pair of lateral faces (300, 304) and are free from said bent edges (150).

12. Process according to claim 11, comprising the step of fixing said lateral plates (15) on the sides (302, 306) of the filtering element by gluing and/or welding.

13. Process according to claim 12, comprising the steps of:
- orienting at least one of said lateral plates (15) by directing the bent edges (150) upwards;
- pouring a fluid adhesive substance (C) on the said at least one lateral plate (15);
- fixing said at least one lateral plate (15) to one of said first lateral faces (302, 306) of the filtering element (3) by means of the adhesive substance (C) poured on said at least one lateral plate (15).

14. Process according to claim 13, comprising the step of allowing the adhesive substance (C) to harden by leaving the filtering element (3) laid on said at least one lateral plate (15).

## Patentansprüche

1. Filter für Flüssigkeiten, umfassend eine Filterpatrone (1), die ihrerseits ein Filterelement (3) umfasst, das eine parallelepipedähnliche Form aufweist und aus dem Stapeln einer Mehrzahl von gewellten Blättern, die durch Filtermaterial hergestellt sind, und einer Mehrzahl von nicht gewellten Blättern erhalten wird, die aus Filtermaterial hergestellt sind, wobei:
- das Filterelement (3) eine zulaufseitige Fläche (4), eine ablaufseitige Fläche (6) und vier Seiten (300, 302, 304, 306) definiert, die sich zwischen der zulaufseitigen Fläche und der ablaufseitigen Fläche erstrecken;
- jedes Blatt aus gewelltem Filtermaterial sich mit einem Blatt aus nicht gewelltem Filtermaterial abwechselt;
- die Wellen jedes Blattes aus gewelltem Filtermaterial eine Mehrzahl von Nuten bilden, die jeweils nebeneinander angeordnet sind und sich von der zulaufseitigen Fläche (4) zu der ablaufseitigen Fläche (6) erstrecken;
- im Wesentlichen in jedem gewellten Blatt die Enden der Nuten auf einer vorbestimmten Fläche dieses gewellten Blattes an der zulaufseitigen Fläche (4) geschlossen und an der ablaufseitigen Fläche (6) offen sind, während die Enden der Nuten auf der Fläche gegenüber der vorbestimmten Fläche des gleichen gewellten Blattes an der ablaufseitigen Fläche (6) geschlossen und an der zulaufseitigen Fläche (4) offen sind, um die Flüssigkeit, welche gefiltert werden soll und hauptsächlich von der zulaufseitigen Fläche zur ablaufseitigen Fläche fließt, zu zwingen, das Filtermaterial vor dem Verlassen des Filters zu durchqueren; und
- die Seiten ein erstes Paar von jeweils gegenüberliegenden Seitenflächen (302, 306), welche die Kanten der gewellten und nicht gewellten Blätter umfassen, und ein zweites Paar von jeweils gegenüberliegenden Seitenflächen (300, 304) benachbart zum ersten Paar von Seitenflächen (302, 306) definieren;
das Filter **dadurch gekennzeichnet ist, dass** die Filterpatrone (1) ein Paar von Seitenplatten (15) umfasst, die an den Seiten (300, 302, 304, 306) des Filterelements befestigt sind, um die Seiten am ersten Paar von Seitenflächen (302, 306) im Wesentlichen in einer flüssigkeitsdichten Weise zu schließen; und die Seitenplatten (15) ferner mit gebogenen Kanten (150) versehen sind, die das zweite Paar von Seitenflächen (300, 304) nur teilweise in einer derartigen Weise abdecken, dass das Filter eine Flüssigkeit auch durch Abschnitte filtern kann, welche zu dem zweiten Paar von Seitenflächen (300, 304) gehören und frei von den gebogenen Kanten (150) sind.

2. Filter nach Anspruch 1, wobei die Flächen (300, 302, 304, 306) im Wesentlichen eben sind, und jede Seitenplatte (15) eine im Wesentlichen ebene Form aufweist.

3. Filter nach einem oder mehreren der vorhergehenden Ansprüche, wobei sich die gebogenen Kanten (150) jeder Seitenplatte (15) über den gesamten Umfang der Seitenplatte selbst erstrecken.

4. Filter nach einem oder mehreren der vorhergehenden Ansprüche, wobei jede Seitenplatte (15) an das Filterelement (3) geklebt und/oder geschweißt ist.

5. Filter nach Anspruch 4, wobei jede Seitenplatte (15) durch Einfügen einer Klebstoffsubstanz (C) zwischen die Seitenplatte (15) selbst und das Filterelement (3) an das Filterelement (3) geklebt ist.

6. Filter nach einem oder mehreren der vorhergehenden Ansprüche, wobei jede Seitenplatte (15) aus Kunststoffmaterial hergestellt ist.

7. Filter nach einem oder mehreren vorhergehenden Ansprüche, wobei jede Seitenplatte (15) aus im Wesentlichen nicht geschäumtem Material hergestellt ist.

8. Filter nach Anspruch 6 und/oder 7, wobei die Mindestdicke der Wand (S) jeder Seitenplatte (15) im Wesentlichen gleich wie oder größer als 0,5 mm ist.

9. Filter nach einem oder mehreren der vorhergehenden Ansprüche, wobei die Mindesthöhe (H) der gebogenen Kanten (150) jeder Seitenplatte (15) im Wesentlichen gleich wie oder größer als die mittlere Höhe (HS) der Nuten der gewellten Blätter ist.

10. Filter nach einem oder mehreren der vorhergehenden Ansprüche, wobei die Mindesthöhe (H) der gebogenen Kanten (150) jeder Seitenplatte (15) im Wesentlichen gleich wie oder größer als etwa 3 mm ist.

11. Prozess zur Herstellung eines Filters für Flüssigkeiten mit den Merkmalen nach einem oder mehreren der vorhergehenden Ansprüche, umfassend die folgenden Schritte:
a) Bereitstellen eines Filterelements (3), das eine parallelepipedähnlichen Form aufweist und aus dem Stapeln einer Mehrzahl von Blättern aus gewelltem Filtermaterial und einer Mehrzahl von Blättern aus nicht gewelltem Filtermaterial erhalten wird, wobei:
a.1) das Filterelement (3) eine zulaufseitige Fläche (4), eine ablaufseitige Fläche (6) und vier Seiten (300, 302, 304, 306) definiert, die sich zwischen der zulaufseitigen Fläche (4) und der ablaufseitigen Fläche (6) erstrecken; die Seiten ein erstes Paar von jeweils gegenüberliegenden Seitenflächen (302, 306), welche die Kanten der gewellten und nicht gewellten Blätter umfassen, und ein zweites Paar von jeweils gegenüberliegenden Seitenflächen (300, 304) benachbart zum ersten Paar von Seitenflächen (302, 306) definieren;
a.2) jedes Blatt aus gewelltem Filtermaterial sich mit einem Blatt aus nicht gewelltem Filtermaterial abwechselt;
a.3) die Wellen jedes Blattes aus gewelltem Filtermaterial eine Mehrzahl von Nuten bilden, die jeweils nebeneinander angeordnet sind und sich von der zulaufseitigen Fläche (4) zu der ablaufenden Fläche (6) erstrecken;
a.4) im Wesentlichen in jedem gewellten Blatt die Enden der Nuten, die durch eine vorbestimmte Fläche dieses gewellten Blattes gebildet werden, an der zulaufseitigen Fläche (4) geschlossen und an der ablaufseitigen Fläche (6) offen sind, während die Enden der Nuten, die durch die Fläche gegenüber der vorbestimmten Fläche des gleichen gewellten Blattes gebildet werden, an der ablaufseitigen Fläche (6) geschlossen und an der zulaufseitigen Fläche (4) offen sind, um die Flüssigkeit, welche gefiltert werden soll und hauptsächlich von der zulaufseitigen Fläche zur ablaufseitigen Fläche fließt, zu zwingen, das Filtermaterial vor dem Verlassen des Filters zu durchqueren;
b) Anordnen eines Paares von Seitenplatten (15), die mit gebogenen Kanten (150) versehen sind;
c) Befestigen der Seitenplatten (15) an den Seiten (302, 306) des Filterelements, um die Seiten am ersten Paar von Seitenflächen (302, 306) im Wesentlichen in einer flüssigkeitsdichten Weise zu schließen; und so dass die gebogenen Kanten (150) der Seitenplatten (15) das zweite Paar von Seitenflächen (300, 304) nur teilweise abdecken; und das Filter eine Flüssigkeit auch durch Abschnitte filtern kann, welche zu dem zweiten Paar von Seitenflächen (300, 304) gehören und frei von den gebogenen Kanten (150) sind.

12. Prozess nach Anspruch 11, umfassend den Schritt des Befestigens der Seitenplatten (15) durch Kleben und/oder Schweißen an den Seiten (302, 306) des Filterelements.

13. Prozess nach Anspruch 12, umfassend die folgenden Schritte:
- Orientieren wenigstens einer der Seitenplatten (15) durch Aufwärtsrichten der gebogenen Kanten (150);
- Gießen einer flüssigen Klebstoffsubstanz (C) auf die mindestens eine Seitenplatte (15);
- Befestigen der mindestens einen Seitenplatte (15) an einer der ersten Seitenflächen (302, 306) des Filterelements (3) mittels der auf die mindestens eine Seitenplatte (15) gegossenen Klebstoffsubstanz (C).

14. Prozess nach Anspruch 13, umfassend den Schritt des Aushärtenlassens der Klebstoffsubstanz (C), indem das Filterelement (3) auf der mindestens einen Seitenplatte (15) liegen gelassen wird.

## Revendications

1. Filtre pour fluides, comprenant une cartouche filtrante (1) comprenant à son tour un élément filtrant (3) ayant une forme parallélépipédique et obtenu par empilement d'une pluralité de plaques ondulées faites de matériau filtrant et d'une pluralité de plaques non ondulées faites de matériau filtrant, dans lequel :
- l'élément filtrant (3) définit une face amont (4), une face aval (6) et quatre côtés (300, 302, 304, 306) s'étendant entre la face amont et la face aval ;
- chaque plaque de matériau filtrant ondulé alterne avec une plaque de matériau non ondulé ;
- les ondulations de chaque plaque de matériau filtrant ondulé forment une pluralité de gorges respectivement disposées côte à côte et s'étendant de la face amont (4) à la face aval (6) ;
- sur essentiellement chaque plaque ondulée, les extrémités des gorges situées sur une face prédéterminée de cette plaque ondulée sont fermées au niveau de la face amont (4) et ouvertes au niveau de la face aval (6), tandis que les extrémités des gorges situées sur la face opposée à ladite face prédéterminée de la même plaque ondulée sont fermées au niveau de la face aval (6) et ouvertes au niveau de la face amont (4), afin de faire passer le fluide, qui doit être filtré et qui s'écoule principalement de la face amont à la face aval, à travers le matériau filtrant avant de quitter le filtre ; et
- lesdits côtés définissent une première paire de faces latérales (302, 306) respectivement opposées, comprenant les bords des plaques ondulées et non ondulées, et une deuxième paire de faces latérales (300, 304) respectivement opposées, adjacente à ladite première paire de faces latérales (302, 306) ;
ledit filtre étant **caractérisé en ce que** la cartouche filtrante (1) comprend un couple de plaques latérales (15) fixées aux côtés (300, 302, 304, 306) de l'élément filtrant afin de fermer, de façon essentiellement étanche aux fluides, lesdits côtés au niveau de la première paire de faces latérales (302, 306) ; lesdites plaques latérales (15) étant en outre pourvues de bords courbés (150) ne couvrant que partiellement ladite deuxième paire de faces latérales (300, 304) de telle sorte que ledit filtre est capable de filtrer un fluide, même à travers des parties qui appartiennent à ladite deuxième paire de faces latérales (300, 304) et qui sont dépourvues desdits bords courbés (150).

2. Filtre selon la revendication 1, dans lequel lesdites faces (300, 302, 304, 306) sont essentiellement planes et chaque plaque latérale (15) a une forme essentiellement plane.

3. Filtre selon une ou plusieurs des revendications précédentes, dans lequel les bords courbés (150) de chaque plaque latérale (15) s'étendent sur l'ensemble du périmètre de la plaque latérale elle-même.

4. Filtre selon une ou plusieurs des revendications précédentes, dans lequel chaque plaque latérale (15) est collée et/ou soudée à l'élément filtrant (3).

5. Filtre selon la revendication 4, dans lequel chaque plaque latérale (15) est collée à l'élément filtrant (3) par interposition d'une substance adhésive (C) entre la plaque latérale (15) elle-même et l'élément filtrant (3).

6. Filtre selon une ou plusieurs des revendications précédentes, dans lequel chaque plaque latérale (15) est faite de matière plastique.

7. Filtre selon une ou plusieurs des revendications précédentes, dans lequel chaque plaque latérale (15) est faite de matière essentiellement non expansée.

8. Filtre selon la revendication 6 ou 7, dans lequel l'épaisseur minimale de la paroi (S) de chaque plaque latérale (15) est essentiellement supérieure ou égale à 0,5 mm.

9. Filtre selon une ou plusieurs des revendications précédentes, dans lequel la hauteur minimale (H) des bords courbés (150) de chaque plaque latérale (15) est essentiellement supérieure ou égale à la hauteur moyenne (HS) des gorges des plaques ondulées.

10. Filtre selon une ou plusieurs des revendications précédentes, dans lequel la hauteur minimale (H) des bords courbés (150) de chaque plaque latérale (15) est essentiellement supérieure ou égale à environ 3 mm.

11. Procédé de fabrication d'un filtre pour fluides selon une ou plusieurs des revendications précédentes, comprenant les étapes suivantes consistant à :
a) fournir un élément filtrant (3) ayant une forme parallélépipédique et obtenu par empilement d'une pluralité de plaques de matériau filtrant ondulé et d'une pluralité de plaques de matériau filtrant non ondulé, dans lequel :
a.1) l'élément filtrant (3) définit une face amont (4), une face aval (6) et quatre côtés (300, 302, 304, 306) s'étendant entre la face amont (4) et la face aval (6) ; lesdits côtés définissant une première paire de faces latérales (302, 306) respectivement opposées, comprenant les bords des plaques ondulées et non ondulées, et une deuxième paire de faces latérales (300, 304) respectivement opposées, adjacente à ladite première paire de faces latérales (302, 306) ;
a.2) chaque plaque de matériau filtrant ondulé alterne avec une plaque de matériau filtrant non ondulé ;
a.3) les ondulations de chaque plaque de matériau filtrant ondulé forment une pluralité de gorges respectivement disposées côte à côte et s'étendant de la face amont (4) à la face aval (6) ;
a.4) sur essentiellement chaque plaque ondulée, les extrémités des gorges formées par une face prédéterminée de cette plaque ondulée sont fermées au niveau de la face amont (4) et ouvertes au niveau de la face aval (6), tandis que les extrémités des gorges formées par la face opposée à ladite face prédéterminée de la même plaque ondulée sont fermées au niveau de la face aval (6) et ouvertes au niveau de la face amont (4), afin de faire passer le fluide, qui doit être filtré et qui s'écoule principalement de la face amont à la face aval, à travers le matériau filtrant avant de quitter le filtre ;
b) disposer une paire de plaques latérales (15) pourvues de bords courbés (150) ;
c) fixer lesdites plaques latérales (15) aux côtés (302, 306) de l'élément filtrant afin de fermer, de façon essentiellement étanche aux fluides, lesdits côtés au niveau de la première paire de faces latérales (302, 306), et de sorte que les bords courbés (150) desdites plaques latérales (15) ne couvrent que partiellement ladite deuxième paire de faces latérales (300, 304) ; ledit filtre étant capable de filtrer un fluide, même à travers des parties qui appartiennent à ladite deuxième paire de faces latérales (300, 304) et qui sont dépourvues desdits bords courbés (150).

12. Procédé selon la revendication 11, comprenant l'étape consistant à fixer lesdites plaques latérales (15) aux côtés (302, 306) de l'élément filtrant par collage et/ou soudage.

13. Procédé selon la revendication 12, comprenant les étapes consistant à :
- orienter au moins une desdites plaques latérales (15) en dirigeant les bords courbés (150) vers le haut ;
- verser une substance adhésive fluide (C) sur ladite au moins une plaque latérale (15) ;
- fixer ladite au moins une plaque latérale (15) à l'une desdites premières faces latérales (302, 306) de l'élément filtrant (3) au moyen de la substance adhésive (C) versée sur ladite au moins une plaque latérale (15).

14. Procédé selon la revendication 13, comprenant l'étape consistant à laisser la substance adhésive (C) durcir en laissant l'élément filtrant (3) posé sur ladite au moins une plaque latérale (15).
